# EUROPÄISCHE PATENTSCHRIFT

(11) **EP 2 607 146 B1**
(45) Veröffentlichungstag und Bekanntmachung des Hinweises auf die Patenterteilung: **26.11.2014**
(21) Anmeldenummer: 13160336.7
(22) Anmeldetag: 04.02.2010
(51) Int. Cl.: B60L 11/02, H02K 5/20, H02K 9/16, F02B 63/00, F02B 53/14, F02B 63/04, F01C 21/06, F01C 13/00

(54) **Stromerzeugungsaggregat**
Power generation plant
Groupe producteur d'électricité

(30) Priorität: 05.02.2009 AT 2012009; 02.04.2009 AT 5242009
(43) Veröffentlichungstag der Anmeldung: 26.06.2013
(62) Teilanmeldung aus: 10702490.3
(73) Patentinhaber: AVL List GmbH, 8020 Graz (AT)
(72) Erfinder: Benda, Vincent, 85114 BUXHEIM (DE); Fischer, Robert, 8010 GRAZ (AT); Graf, Bernhard, 8045 GRAZ (AT); Hubmann, Christian, 8054 GRAZ (AT); Kunzemann, Ralf, 8061 ST. RADEGUND (AT); List, Helmut, 8010 GRAZ (AT); Hohenberg, Günter, 8010 GRAZ (AT); Wolkersdorfer, Josef, 8045 GRAZ (AT)
(74) Vertreter: Babeluk, Michael

(56) Entgegenhaltungen:
- DE-A1- 2 428 327
- DE-A1- 10 122 281
- DE-A1- 10 241 807
- DE-A1- 19 500 774
- DE-A1-102007 043 610

## Beschreibung

Die Erfindung betrifft ein Stromerzeugungsaggregat insbesondere zur Reichweitenerweiterung eines elektrisch betriebenen Kraftfahrzeuges, mit einer Brennkraftmaschine, insbesondere einer Drehkolbenbrennkraftmaschine, und einem mit dieser achsgleich angeordneten Generator mit einem mit der Antriebswelle drehverbundenen Rotor, wobei auf der Antriebswelle der Brennkraftmaschine zumindest eine mit dieser mitrotierende Ausgleichsmasse angeordnet ist.

Aus der US 2005/0279542 A1 ist ein autonom betreibbares tragbares Stromerzeugungsaggregat bekannt, welches dazu dient, die Reichweite eines Elektrofahrzeuges auszudehnen. Das Stromerzeugungsaggregat weist eine Brennkraftmaschine und einen koaxial zu dieser angeordneten Generator auf, wobei Brennkraftmaschine und Generator in einem gemeinsamen Gehäuse angeordnet sind. Das gemeinsame Gehäuse, welches durch eine Trennwand in zwei Bereich unterteilt ist, wird von Kühlluft durchströmt, wobei die Kühlluft im Bereich des Generators in das Gehäuse ein- und am brennkraftmaschinenseitigen Ende des Gehäuses wieder ausströmt. Für die Förderung der Kühlluft weist der Rotor des Generators sowie die Abtriebswelle der Brennkraftmaschine Gebläseflügel auf.

Die US 7,049,707 B2 offenbart ein Stromerzeugungsaggregat, bestehend aus einer Brennkraftmaschine und einem Generator, welche über eine gemeinsame Welle miteinander verbunden sind. Brennkraftmaschine und Generator sind in einem gemeinsamen Gehäuse angeordnet, welches auf der Seite des Generators und auf der Seite der Brennkraftmaschine Eintrittsöffnungen für Kühlluft aufweist, wobei die Kühlluft durch Gebläserotoren gefördert wird.

Aus der DE 10 2005 062 529 A1 ist eine Schwenkkolbenmaschine bekannt, welche einen Verbrennungsmotorteil mit einem Gehäuse aufweist. An dem Verbrennungsmotorteil schließt sich in Richtung der Drehachse ein elektromotorischer Teil an, der in einem an das Gehäuseteil des Verbrennungsmotorteils anschließenden Gehäuseteil angeordnet ist.

Die US 6,698,395 B1 offenbart einen Hybridmotor mit einem elektrischen Generator, einem Elektromotor und einer Drehkolbenbrennkraftmaschine.

Die DE 102007043610 A1 zeigt ein Stromerzeugungsaggregat mit einer Brennkraftmaschine und einem mit dieser achsgleich angeordneten Generator mit einem mit der Antriebswelle drehverbundenen Rotor, welcher eine mitrotierende Ausgleichsmasse aufweist.

Weiters ist aus der DE 102 41 807 A1 eine Stromerzeugeranordnung mit einer Rotationskolbenmaschine und einem von einer Abtriebswelle der Rotationskolbenmaschine betriebenen Stromgenerator bekannt.

Es ist beispielsweise aus der DE 195 00 774 A1 oder der DE 24 28 327 A1 bekannt, bei Drehkolbenbrennkraftmaschinen einen Massenausgleich vorzusehen.

Ferner ist es aus der DE 101 22 281 A1 bekannt, bei Elektromaschinen Ausgleichsmassen vorzusehen, die in den Rotor integriert sind.

Weiters wird in der DE 39 30 901 A1 ein Maschinenaggregat bestehend aus einer Rotationskolbenbrennkraftmaschine und einem Rotationskolbenkompressor, sowie einem Generator beschrieben. Der Kompressor und der Stromgenerator werden über Riemenantriebe durch die Brennkraftmaschine angetrieben. Weiters treibt die Brennkraftmaschine über ein Kardangelenk und eine unverdrehbar in sich längsverschiebbare Antriebswelle ein Lüfterrad an. Die Brennkraftmaschine kann über einen im Strom des Lüfterrades liegenden Kühler gekühlt werden. Das Maschinenaggregat ist als transportables Gerät für den Einsatz bei Katastrophenfällen oder für militärische Zwecke bestimmt.

Bekannte Stromerzeugungsaggregate haben den Nachteil, dass sie relativ unhandlich und schwer sind und viel Bauraum beanspruchen. Trotz bekannter Bemühungen, durch schalldämmende Kapselungen oder dergleichen, eine Geräuschverminderung zu erreichen, weisen herkömmliche Stromerzeugungsaggregate ein relativ hohes Betriebsgeräusch auf. Daher sind herkömmliche Stromerzeugungsaggregate nur bedingt im Einsatz in Kraftfahrzeugen, insbesondere in Elektrokraftfahrzeugen geeignet.

Stromerzeugungsaggregate, welche als sogenannten Range-Extender für Elektrofahrzeuge eingesetzt werden, sollen möglichst geräuscharm betrieben werden können, wenig Bauraum in Anspruch nehmen und geringes Gewicht aufweisen und trotzdem eine hohe Leistungsdichte aufweisen. Diese Anforderungen werden mit bekannten Stromerzeugungsaggregaten nur teilweise erfüllt.

Aufgabe der Erfindung ist es daher, ein Stromerzeugungsaggregat zu entwickeln, welches die genannten Anforderungen erfüllt und eine hohe Leistungsdichte bei geringem Betriebsgeräusch aufweist. Darüber hinaus soll das Stromerzeugungsaggregat kompakt ausgeführt sein und geringes Gewicht aufweisen, so dass es in einfacher Weise in herkömmliche Elektrofahrzeugkonzeptionen mit möglichst wenig zusätzlichem Aufwand integriert werden kann.

Erfindungsgemäß wird dies dadurch erreicht, dass eine erste Ausgleichsmasse am Rotor des Generators angeordnet ist, welche vorzugsweise integral mit dem

Rotor ausgebildet ist, dass anschließend an den Generator im Bereich eines ersten Endes der Antriebswelle eine Kühlmittelpumpe angeordnet ist, deren Laufrad mit der Antriebswelle drehverbunden ist, und dass im Bereich eines eine zweite Ausgleichsmasse aufweisenden zweiten Endes der Antriebswelle, welches dem ersten Ende abgewandt ist, eine Ölpumpe angeordnet ist, deren Laufrad mit der Antriebswelle drehverbunden ist.

Dadurch, dass an einem Ende der Antriebswelle anschließend an den Generator mit der vorzugsweise in den Rotor integrierten ersten Ausgleichsmasse eine Kühlpumpe und am zweiten Ende der Antriebswelle die zweite Ausgleichsmasse und die Ölpumpe angeordnet ist, ergibt sich eine ausbalancierte Massenverteilung bei äußerst kompakter und gewichtsarmer Anordnung der Komponenten. Die Ölpumpe kann dabei zwischen der Brennkraftmaschine und der zweiten Ausgleichsmasse angeordnet sein, wodurch eine besonders platzsparende Konstruktion möglich wird.

Der Rotor des Generators kann also mit der ersten Ausgleichsmasse für den Massenausgleich verbunden sein oder mit dieser eine Einheit bilden. Im Rahmen der Erfindung kann weiters vorgesehen sein, dass ein Gehäuse des Generators und ein abtriebseitiger Gehäuseteil der Brennkraftmaschine eine Einheit bilden, vorzugsweise einteilig ausgeführt sind. Dies ermöglicht eine sehr kompakte und geräuscharme Ausführung.

Eine äußerst kompakte und schallarme Konzeption lässt sich erreichen, wenn sowohl die Brennkraftmaschine, als auch der Generator wassergekühlt sind, wobei das Gehäuse der Brennkraftmaschine und das Gehäuse des Generators integrierte Kühlkanäle aufweisen, und die Kühlkanäle der Brennkraftmaschine und die Kühlkanäle des Generators leitungslos miteinander strömungsverbunden sein können. Dabei ist es besonders vorteilhaft, wenn das Gehäuse des Generators direkt an das Gehäuse der Brennkraftmaschine anschließt, wobei vorzugsweise das Gehäuse des Generators integral mit dem Gehäuse der Brennkraftmaschine ausgebildet ist.

Die Erfindung wird im Folgenden anhand der Figuren näher erläutert. Es zeigen:
- Fig. 1: das erfindungsgemäße Stromerzeugungsaggregat in einem Längsschnitt; und
- Fig. 2: eine Brennkraftmaschinen-Generator-Einheit des Stromerzeugungsaggregates in einem Längsschnitt.

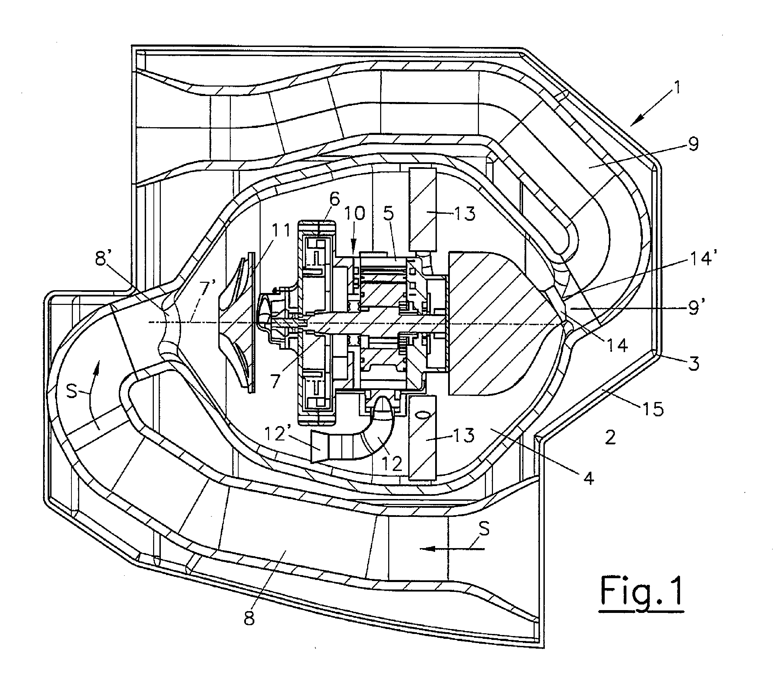

Fig. 1 zeigt ein Stromerzeugungsaggregat 1 mit einem inneren Gehäuse 2 und einem äußeren Gehäuse 3. Das innere Gehäuse 2 bildet einen Kühlraum 4 aus, in welchem eine Brennkraftmaschine 5 und ein Generator 6 angeordnet sind, wobei der Generator 6 mit der Abtriebswelle 7 der Brennkraftmaschine 5 drehverbunden ist. Die Brennkraftmaschine 5 ist im Ausführungsbeispiel durch einen Kreiskolbenmotor gebildet. Der Kühlraum 4 ist im Wesentlichen rohrförmig ausgebildet, wobei generatorseitig ein Zuluftkanal 8 etwa im Bereich der Abtriebswellenachse 7' in den Kühlraum 4 einmündet. Auf der Seite der Brennkraftmaschine 5 geht vom Kühlraum 4 im Bereich der Abtriebswellenachse 7' ein Abluftkanal 9 aus. Zuluftkanal 8, Kühlraum 4 und Abluftkanal 9 bilden in der in Fig. 1 dargestellten Schnittdarstellung bzw. einer Draufsicht auf das Stromerzeugungsaggregat die Form eines "S", so dass eine äußerst kompakte Packung erreicht werden kann.

Die durch Brennkraftmaschine 5 und Generator 6 gebildete Brennkraftmaschinen-Generator-Einheit 10 ist über schwingungsdämpfende Motorlager im Innengehäuse 2 abgestützt. Auf der Seite der Mündung 8' der Zuluftleitung 8 in den Kühlraum 4 ist ein Gebläselaufrad 11 angeordnet, welches durch die Abtriebswelle 7 angetrieben wird. Durch das Gebläselaufrad 11 wird ein Luftstrom entsprechend den Pfeilen S im Zuluftkanal 8, Kühlraum 4 und in der Abluftkanal 9 erzeugt, wobei die Brennkraftmaschinen-Generator-Einheit 10 in Form einer Mantelströmung umströmt wird.

Stromabwärts des Gebläselaufrades 11 ist die Ansaugöffnung 12' einer Ansaugleitung 12 der Brennkraftmaschine 5 angeordnet. Dadurch kann bereits durch das Gebläselaufrad 11 vorverdichtete Luft von der Brennkraftmaschine 5 angesaugt werden, was sich vorteilhaft auf die Motorleistung auswirkt.

Die Brennkraftmaschine 5 ist wassergekühlt ausgeführt. Zur optimalen Kühlung der Brennkraftmaschine 5 sind im Kühlraum 4 beidseits der Abtriebswellenachse 7' Luft/Wasser-Wärmetauscher 13 angeordnet, welche durch die Kühlluft S angeströmt werden. Im Bereich des Austrittes 9' der Austrittsleitung 9 aus dem Kühlraum 4 ist die Mündung 14' einer Abgasleitung 14 der Brennkraftmaschine 5 angeordnet, so dass die Abgase direkt in den Kühlluftstrom S eingebracht werden und sich mit der Kühlluft vermischen. Dies ermöglicht einerseits eine Abkühlung der Abgase und andererseits eine wirksame Reduktion der Schallabstrahlung.

In das äußere Gehäuse 3 des Stromerzeugungsaggregates 1 ist ein Kraftstofftank 15, zumindest auf einer Seite des Kühlraumes 4, in das Stromerzeugungsaggregat 1 integriert.

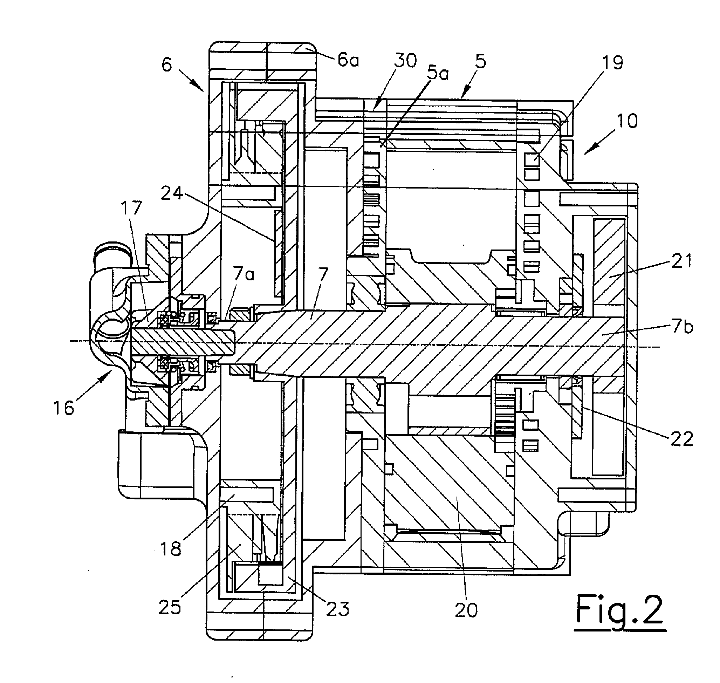

Wie aus Fig. 2 erkennbar, ist in die Brennkraftmaschinen-Generator-Einheit 10 im Bereich eines ersten Endes 7a der Abtriebswelle 7 eine Kühlmittelpumpe 16 integriert, deren Laufrad 17 mit der Abtriebswelle 7 drehverbunden ist. Die Kühlmittelpumpe 16 ist auf der der Mündung 8' der Frischluftleitung 8 zugewandten Seite der Brennkraftmaschinen-Generator-Einheit 10 angeordnet. Das Kühlwasser gelangt aus der Kühlmittelpumpe 16 in nur zum Teil in Fig. 2 ersichtliche Wasserräume 18 des Generators 6 und 19 der Brennkraftmaschine 5 und wird danach den Luft/Wasser-Wärmetauschern 13 zugeführt. Ein Gehäuseteil 5a der Brennkraftmaschine 1 und ein Gehäuse 6a des Generators 6 schließen unmittelbar aneinander an und weisen ein gemeinsames Kühlsystem 30 auf, wobei die Kühlkanäle 18, 19 des Generators 6 und der Brennkraftmaschine 5 ohne separate Leitungen direkt mit einander strömungsverbunden sind.

Die Brennkraftmaschinen-Generator-Einheit 10 ist in sich völlig ausgeglichen, wobei die Unwucht der exzentrischen Abtriebswelle 7 durch eine in den Rotor 23 des Generators 6 integrierte erste Ausgleichsmasse 24, sowie durch eine mit der Abtriebswelle 7 im Bereich eines zweiten Endes 7b drehverbundene zweite Ausgleichsmasse 21 auf der Seite der Ölpumpe 22 ausgeglichen wird. Mit Bezugszeichen 20 ist der Kreiskolben der Brennkraftmaschine 5 angedeutet. Die Ölpumpe 22 ist an dem der Kühlmittelpumpe 16 entgegengesetzten Ende der Abtriebswelle 7 angeordnet.

Bezugszeichen 25 zeigt den Stator des Generators 6 an.

Das äußerst kompakte Stromerzeugungsaggregat 1 ist als Modul aufgebaut und kann somit bei Bedarf in entsprechende Räume eines Elektrofahrzeuges eingesetzt werden, um dessen Reichweite zu erweitern. Die kompakte Bauweise und die hohe Leistungsdichte erlauben es, das Stromerzeugungsaggregat als Range-Extender in bereits vorhandene Konzepte von Elektrofahrzeugen ohne wesentliche Verminderung des Nutzraumes und/oder ohne wesentliche Erhöhung des Baugewichtes einzusetzen.

## Patentansprüche

1. Stromerzeugungsaggregat (1) insbesondere zur Reichweitenerweiterung eines elektrisch betriebenen Kraftfahrzeuges, mit einer Brennkraftmaschine (5), insbesondere einer Drehkolbenbrennkraftmaschine, und einem mit dieser achsgleich angeordneten Generator (6) mit einem mit der Antriebswelle (7) drehverbundenen Rotor (23), wobei auf der Antriebswelle (7) der Brennkraftmaschine (5) zumindest eine mit dieser mitrotierende Ausgleichsmasse (24, 21) angeordnet ist, **dadurch gekennzeichnet, dass** eine erste Ausgleichsmasse (24) am Rotor (23) des Generators (6) angeordnet ist, welche vorzugsweise integral mit dem Rotor (23) ausgebildet ist, dass anschließend an den Generator (6) im Bereich eines ersten Endes (7a) der Antriebswelle (7) eine Kühlmittelpumpe (16) angeordnet ist, deren Laufrad (17) mit der Antriebswelle (7) drehverbunden ist, und dass im Bereich eines eine zweite Ausgleichsmasse (21) aufweisenden zweiten Endes (7b) der Antriebswelle (7), welches dem ersten Ende (7a) abgewandt ist, eine Ölpumpe (22) angeordnet ist, deren Laufrad mit der Antriebswelle (7) drehverbunden ist.

2. Stromerzeugungsaggregat (1) nach Anspruch 1, **dadurch gekennzeichnet, dass** die Ölpumpe (22) zwischen der Brennkraftmaschine (5) und der zweiten Ausgleichsmasse (21) angeordnet ist.

3. Stromerzeugungsaggregat (1) nach einem der Ansprüche 1 oder 2, **dadurch gekennzeichnet, dass** sowohl die Brennkraftmaschine (5) als auch der Generator (6) wassergekühlt ist, wobei das Gehäuse (5a) der Brennkraftmaschine (5) und das Gehäuse (6a) des Generators (6) integrierte Kühlkanäle (18,19) aufweisen, wobei die Kühlkanäle (19) der Brennkraftmaschine und die Kühlkanäle (18) des Generators (6) leitungslos miteinander strömungsverbunden sind.

4. Stromerzeugungsaggregat (1) nach Anspruch 3, **dadurch gekennzeichnet, dass** das Gehäuse (6a) des Generators (6) direkt an das Gehäuse (5a) der Brennkraftmaschine (5) anschließt, wobei vorzugsweise das Gehäuse (6a) des Generators (6) integral mit dem Gehäuse (5a) der Brennkraftmaschine (5) ausgebildet ist.

## Claims

1. A power generation apparatus (1), especially for extending the range of an electrically driven motor vehicle, comprising an internal combustion engine (5), especially a rotating-piston engine, and a generator (6) arranged in axial alignment therewith and comprising a rotor (23) which is rotationally connected to the drive shaft (7), wherein at least one balancing mass (24, 21) is arranged on the drive shaft (7) of the internal combustion engine (5) and rotates with said shaft, **characterised in that** a first balancing mass (24) is arranged on the rotor (23) of the generator (6), which mass is preferably arranged in an integral fashion with the rotor (23), and a coolant pump (16) is arranged adjacent to the generator (6) in the region of a first end (7a) of the drive shaft (7), whose impeller (17) is rotationally connected to the drive shaft (7), and an oil pump (22) is arranged in the region of a second end (7b) of the drive shaft (7) having a second balancing mass (21), which second end faces away from the first end (7a), with the impeller of said oil pump being rotationally connected to the drive shaft (7).

2. A power generation apparatus (1) according to claim 1, **characterised in that** the oil pump (22) is arranged between the internal combustion engine (5) and the second balancing mass (21).

3. A power generation apparatus (1) according to one of the claims 1 or 2, **characterised in that** both the internal combustion engine (5) and also the generator (6) are water-cooled, wherein the housing (5a) of the internal combustion engine (5) and the housing (6a) of the generator (6) comprise integrated cooling ducts (18, 19), wherein the cooling ducts (19) of the internal combustion engine and the cooling ducts (18) of the generator (6) are flow-connected to each other in a duct-free manner.

4. A power generation apparatus (1) according to claim 3 **characterised in that** the housing (6a) of the generator is directly adjacent to the housing (5a) of the internal combustion engine (5), wherein preferably the housing (6a) of the generator (6) is integrally arranged with the housing (5a) of the internal combustion engine (5).

## Revendications

1. Groupe producteur d'électricité (1) en particulier pour étendre la portée d'un véhicule électrique comportant un moteur à combustion interne (5) en particulier un moteur à combustion interne à piston rotatif et un générateur (6) monté co-axialement à celui-ci, avec un rotor (23) solidaire en rotation de l'arbre d'entraînement (7), dans lequel sur l'arbre d'entraînement (7) du moteur à combustion interne (5) est montée au moins une masse d'équilibrage (24, 21) solidaire en rotation de celui-ci,
**caractérisé en ce que**
sur le rotor (23) du générateur (6) est montée une première masse d'équilibrage (24) qui est de préférence réalisée intégralement avec le rotor (23), et, sur le générateur (6), dans la zone d'une première extrémité (7a) de l'arbre d'entraînement (7) est montée une pompe d'agent de refroidissement (16) dont la roue mobile (17) est reliée solidairement en rotation à l'arbre d'entraînement (7), et dans la zone de la seconde extrémité (7b) de l'arbre d'entraînement (7) qui comporte une seconde masse d'équilibrage (21) et qui est située à l'opposé de la première extrémité (7a) est montée une pompe à huile (22) dont la roue mobile est reliée solidairement en rotation à l'arbre d'entraînement (7).

2. Groupe producteur d'électricité (1) conforme à la revendication 1,
**caractérisé en ce que**
la pompe à huile (22) est montée entre le moteur à combustion interne (5) et la seconde masse d'équilibrage (21).

3. Groupe producteur d'électricité (1) conforme l'une des revendications 1 et 2,
**caractérisé en ce que**
le moteur à combustion interne (5) ainsi que le générateur (6) sont refroidis par de l'eau, le carter (5a) du moteur à combustion interne (5) et le carter (6a) du générateur (6) étant équipés de canaux de refroidissement (18, 19) intégrés, les canaux de refroidissement (19) du moteur à combustion interne et les canaux de refroidissement (18) du générateur (6) étant en liaison hydraulique sans conduite.

4. Groupe producteur d'électricité (1) conforme à la revendication 3,
**caractérisé en ce que**
le carter (6a) du générateur (6) est directement relié au carter (5a) du moteur à combustion interne (5), le carter (6a) du générateur (6) étant de préférence formé intégralement avec le carter (5a) du moteur à combustion interne (5).
